# FASCICULE DE BREVET EUROPEEN

(11) **EP 1 668 938 B1**
(45) Date de publication et mention de la délivrance du brevet: **11.02.2009**
(21) Numéro de dépôt: 04770122.2
(22) Date de dépôt: 29.09.2004
(51) Int. Cl.: H04W 8/18

(54) **METHODE D'APPARIEMENT ENTRE UN TELEPHONE PORTABLE ET UNE CARTE PERSONNELLE**
VERFAHREN ZUM VERGLEICHEN EINES MOBILTELEFONS MIT EINER PERSÖNLICHEN KARTE
METHOD FOR MATCHING A MOBILE TELEPHONE WITH A PERSONAL CARD

(30) Priorité: 30.09.2003 CH 16602003
(43) Date de publication de la demande: 14.06.2006
(73) Titulaire: NagraCard SA, 1033 Cheseaux-sur-Lausanne (CH)
(72) Inventeur: NICOLAS, Christophe, CH-1028 Préverenges (CH); JOLY, Stéphane, CH-1098 Epesses (CH); TAZI, Mehdi, CH-1028 Préverenges (CH)
(74) Mandataire: Wenger, Joel-Théophile
(86) Numéro de dépôt international: PCT/IB2004/051908
(87) Numéro de publication internationale: WO 2005/032153

(56) Documents cités:
- FR-A- 2 815 497
- US-A1- 2003 054 836

## Description

La présente demande concerne le domaine de l'utilisation de services additionnels autour d'un téléphone portable.

Différentes méthodes ont été proposées pour des services à valeur ajoutées autour du téléphone mobile telle que décrite dans le brevet EP 0748135.

Un des aspects de ces méthodes est d'utiliser la connaissance de la localisation d'un usager pour lui transmettre des messages propres aux manifestations ou événements spécifiques à cette localisation.

Sa localisation est en fait déterminée par rapport à l'émetteur le plus proche. Ainsi, des informations tels que la présence d'un restaurant végétarien ou des soldes sont transmises à ces usagers.

Cette émission est aujourd'hui faite au moyen de messages courts SMS mais le protocole de transmission peut évoluer incluant des images (MMS) par exemple.

Ce mode est très peu utilisé car peu d'utilisateurs acceptent de recevoir ce type de messages dont ils savent que la majorité de ceux-ci n'auront pas d'intérêt pour eux.

En effet, dans une ville par exemple, un émetteur peut couvrir un nombre important d'usagers dont une partie sera au travail, une autre partie à leur domicile et seulement un faible nombre, en déplacement, serait susceptible d'être intéressé.

Il est donc hautement recommandé de requérir l'approbation de l'utilisateur avant d'entrer dans une diffusion de tels messages.

Une première solution a été de demander aux utilisateurs d'envoyer un message court à un numéro prédéfini afin de s'enregistrer auprès du service diffusant ces messages. Cette solution, bien que fonctionnant sur le principe, rencontre des réticences du fait de sa relative complexité. En effet, envoyer un message est un geste volontaire qui prend un certain temps et suscite la méfiance de se voir facturer des services non désirés.

Une autre solution consiste à communiquer, depuis le téléphone portable, son identifiant (numéro de téléphone) à une borne de réception par la voie infrarouge ou par onde radio (Bluetooth). Le problème rencontré provient de la multiplicité des standards de communication et de leur faible utilisation. Cette fonction, gourmande en énergie, est généralement désactivée sur la plupart des téléphones.

Une autre solution est decrit dans le document US 2003/054836 Al (MICHOT GERARD) 20 Mars 2003.

L'idéal serait que le téléphone portable soit équipé d'une carte à puce sans contact permettant de transmettre l'identifiant de la carte SIM. Ceci n'est pas aujourd'hui réalisable car les téléphones n'ont pas de telles aptitudes. Les opérateurs sont réticents, pour des raisons de sécurité, d'ouvrir une voie d'accès à la carte SIM par un simple lecteur de carte sans contact.

Ainsi le but de la présente invention est d'utiliser le téléphone portable ou équipement mobile pour des fonctionnalités localisées interactives, et de prouver à un dispositif local que vous êtes bien le détenteur d'un numéro de téléphone donné sans devoir utiliser ce dernier.

Ce problème est résolu grâce à une méthode d'appariement entre un équipement mobile comprenant des informations relatives à son identification et un objet personnel d'identification disposant d'au moins un numéro unique, cette méthode étant effectuée par un terminal d'appariement et comprenant les étapes suivantes:
- lecture du numéro unique de l'objet personnel par un lecteur du terminal d'appariement,
- initialisation d'une première communication sur l'équipement mobile avec le serveur d'appariement,
- génération d'un code unique par le terminal d'appariement et transmission de ce code à l'équipement mobile,
- transmission de ce code unique par l'équipement mobile vers un serveur d'appariement,
- détection et mémorisation des informations relatives à l'identification de l'équipement mobile par le serveur d'appariement,
- transmission du code unique et du numéro unique au serveur d'appariement par le terminal,
- association du numéro unique de l'objet personnel avec les informations relatives à l'identification de l'équipement mobile.

La présence de ce code unique est garante de la sécurité de la procédure. Ce code assure que c'est vraiment l'équipement mobile localement présent qui est concerné par ce mécanisme d'appariement. Ceci évite qu'un numéro incorrect de téléphone soit associé avec un autre objet personnel.

Il existe plusieurs méthodes pour transmettre ce code unique à l'équipement mobile. Le plus simple est d'afficher ce code et de demander à l'utilisateur de l'introduire par son clavier de l'équipement mobile. Cette méthode nous assure que l'utilisateur est bien placé proche du terminal d'appariement.

Une seconde méthode consiste à poser l'équipement mobile sur un dispositif d'émission DTMF intégré dans le terminal d'appariement. Les tonalités audio telles que DTMF sont émises par le dispositif d'émission et transmises au micro de l'équipement mobile. Ces signaux sont ensuite transmis au serveur d'appariement et font office de preuve de la présence de l'équipement mobile au coté de l'objet personnel.

L'utilisateur aura au préalable posé son objet personnel sur un lecteur approprié du terminal d'appariement.

L'association entre les données de l'équipement mobile et de l'objet personnel peut être fait selon différentes manières :
- l'objet personnel ne stocke aucune donnée. Ceci permet l'utilisation d'une carte à lecture uniquement tel qu'un barre code ou une carte magnétique voire une carte à puce sans contact à lecture unique. C'est le serveur d'appariement qui va associer le numéro unique de l'objet personnel et le numéro de téléphone dans sa mémoire.

A chaque présentation 'de l'objet personnel à un terminal de lecture, une requête sera faite à cette mémoire du serveur pour retrouver le numéro de téléphone correspondant.

Les données de cette mémoire peuvent aussi être téléchargées dans les terminaux de lecture afin d'éviter de devoir requérir le serveur pour chaque vérification de l'objet personnel.
- l'objet personnel stocke l'identification du téléphone dans sa mémoire. Ainsi, lors de la lecture de cette carte, !e numéro de téléphone peut être également transmis.
- l'objet personnel stocke les informations qui sont également stockées par le serveur d'appariement. Selon les besoins, le numéro de téléphone est extrait directement de l'objet personnel ou peut être obtenu par le serveur. Il est aussi possible de vérifier que les données de l'objet personnel correspondent avec celles du serveur.

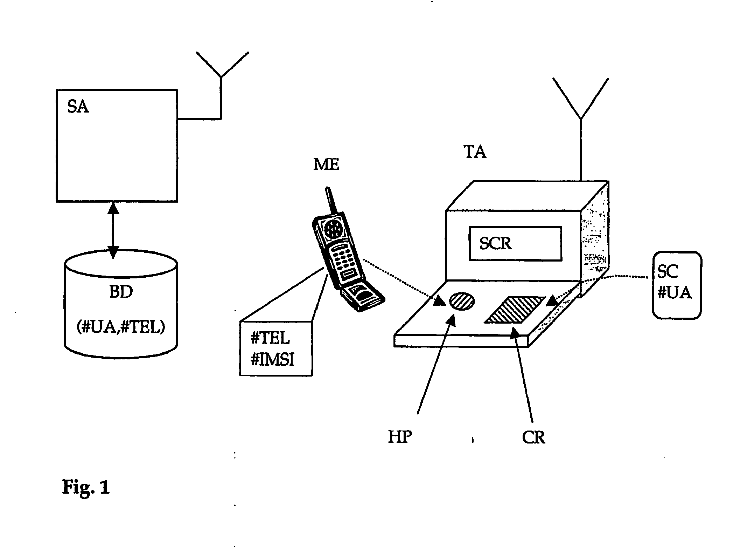

L'invention sera mieux comprise grâce à la description détaillée qui va suivre et qui se réfère aux dessins annexés qui sont donnés à titre d'exemple nullement limitatif, à savoir:
- **la** **figure 1** **illustre les différents éléments de l'invention.**

Sur cette figure 1, le terminal d'appariement TA comprend une plage destinée à recevoir l'objet personnel SC et l'équipement mobile ME. La place destinée à recevoir l'équipement mobile ME comporte un haut-parleur HP permettant de transmettre des signaux DTMF. Ainsi, lorsque l'équipement mobile ME est placé à cet endroit, des signaux peuvent être transmis à l'équipement mobile ME par le terminal d'appariement TA.

Le terminal d'appariement TA va lire le numéro unique UA qui se trouve sur l'objet personnel SC et le mémorise.

Selon une première variante, dite automatique, le terminal va utiliser le haut-parleur HP pour communiquer avec le serveur d'appariement SA. Comme indiqué plus haut, l'utilisateur est invité à composer le numéro correspondant au serveur d'appariement SA. Une fois en liaison, le terminal TA prend le relais et peut dialoguer avec le serveur d'appariement SA. Il est à noter que l'initialisation de cette liaison entre l'équipement mobile ME et le serveur SA permet d'identifier d'une manière sûre l'équipement mobile ME par le serveur. Ce dernier reçoit des informations comme le numéro de téléphone au minimum. S'il s'agit d'un serveur qui fait partie de l'équipement de l'opérateur de téléphonie, d'autres informations sont disponibles telles que le numéro unique IMSI de la carte SIM de l'équipement mobile ME.

Le serveur SA reçoit de la part du terminal, via l'équipement mobile ME un code unique qui pourrait être le numéro unique de la carte personnelle SC placée sur le lecteur de carte CR. Le serveur SA envoie un message au terminal qui va contenir le numéro unique et le numéro de téléphone.

Ce code unique peut être généré aléatoirement afin de s'assurer que c'est ce terminal qui est en connexion avec le serveur d'appariement à un moment donné. Ce code est ensuite retourné au terminal par le serveur qui peut faire le lien entre ce code et le numéro unique de l'objet personnel qui était placé sur le lecteur à cet effet au moment de l'émission du code.

L'échange des données peut être réalisé en plusieurs temps. En effet, une fois le code unique transmis au serveur d'appariement SA, ce dernier stocke le numéro de téléphone de l'appelant et le code unique ainsi que l'heure de la transaction.

Dans un second temps, le terminal TA peut initier un dialogue avec le serveur SA et lui communiquer le code unique et le numéro unique de l'objet personnel SC. L'appariement peut donc de faire en mode off-line, par exemple la nuit. Le fait de transmettre un code unique lors de la liaison entre l'équipement mobile et le serveur d'appariement, oblige un tiers malveillant d'attaquer deux communications qui peuvent utiliser des voies différentes. En effet, la liaison entre le serveur et le terminal sera avantageusement de type filaire contrairement à la communication entre l'équipement mobile et le serveur. La base de données BD du serveur d'appariement SA va conserver le couple numéro unique UA et numéro de téléphone TEL.

L'information du numéro de téléphone de l'équipement mobile est ensuite transférée dans l'objet personnel SC de l'utilisateur selon l'un des modes de réalisation. Pour des raisons de sécurité, le numéro de téléphone est signé, soit par une clé privée d'émission qui se trouve dans le terminal, soit par une clé privée qui se trouve dans le serveur d'appariement. Dans ce dernier cas, lors de la connexion entre le serveur et le terminal, en plus du numéro de téléphone (ou autre information sur l'équipement mobile), le serveur transmet également la signature du numéro de téléphone.

Lorsqu'un lecteur souhaite connaître le numéro de téléphone en lisant le contenu de l'objet personnel, ce lecteur peut également vérifier que ce numéro est authentique grâce à la clé publique d'émission qui est stockée dans chaque lecteur selon une procédure classique de vérification.

Selon le mode de réalisation choisi, le message renvoyé par le serveur au terminal peut être transmis via la communication initiée par l'utilisateur en mode bi-directionnel. Durant cette communication, le serveur d'appariement peut transmettre les données d'identification de l'équipement mobile tel que son numéro de téléphone.

Ce numéro pourra être immédiatement inscrit dans l'objet personnel s'il dispose d'une mémoire à cet effet. Bien entendu, ce type de communication est assortie de codes de vérification tel qu'un CRC ou un Hash.

Selon un autre mode de réalisation, le message est transmis par une autre voie, par exemple un message court SMS. Les communications entre le terminal et le serveur peuvent être encryptées grâce à l'utilisation de clés asymétriques.

Selon un mode simplifié de l'invention, dit sans code unique, le terminal d'appartement TA va stocker les informations d'appariement. Une fois la communication établie entre l'équipement mobile ME et un serveur de confiance, ce dernier renvoie le numéro de téléphone sous forme de signaux DTMF. Ces signaux sont captés par le terminal d'appariement qui dispose donc d'une part du numéro unique UA de l'objet personnel SC (lu par le lecteur CR) et d'autre part du numéro de téléphone reçu du serveur de confiance (via l'équipement mobile). Ce serveur est dit de confiance car il ne faudrait pas que n'importe quel service renvoie le numéro de téléphone et à cet effet, le serveur de confiance va ajouter des informations d'identification dans le message transmis au terminal d'appariement, message qui contient également le numéro de téléphone.

C'est le terminal d'appariement qui dispose des deux informations à associer soit le numéro unique UA et le numéro de téléphone TEL. Ces deux informations peuvent être transmises dans un deuxième temps à un service centralisé (le serveur d'appariement par exemple) pour que les lecteurs de reconnaissance puissent avoir accès à ces informations.

Le fait d'associer d'une manière sécurisée un numéro de téléphone et un numéro de carte personnelle ouvre la porte à des applications nombreuses. En effet, l'achat d'un billet de spectacle est déjà possible par téléphone. Une fois l'achat effectué, le numéro de l'appelant sert de clé pour l'accès au spectacle. La carte personnelle, en indiquant le numéro de téléphone du titulaire, va permettre cet accès.

Un autre avantage de cette situation est la possibilité de charger sans risque des données dans l'objet personnel pour d'autres applications. Un magasin peut par exemple offrir un tel objet sous la forme d'une carte client et ajouter des données propres à ses besoins sur celle-ci tel que le paiement par carte client.

Ceci permet par exemple à un client de se faire connaître lors de l'entrée dans un magasin. Ce dernier dispose d'un serveur de messages en étroite liaison avec le ou les opérateurs de téléphonie sans fil. Des messages sont diffusés aux numéros de téléphones reconnus lors du passage près de ces bornes de lecture placées aux entrées du magasin.

Des services plus évolués peuvent être offerts tels que l'annonce que les produits commandés sont disponibles dès lors que le client est reconnu à l'intérieur du magasin. Ceci évite d'aller à chaque fois s'adresser à un guichet pour s'entendre dire que malheureusement, la chemise commandée n'est pas encore arrivée.

Selon un mode de réalisation, la carte sans contact est une simple étiquette électronique très fine que l'on colle sur le dos du téléphone portable. Une telle étiquette comporte une antenne et une puce stockant les informations.

Ainsi dans le cadre de cette demande, il est proposé un système de diffusion de messages à un ensemble d'usagers de communication mobile, cet ensemble étant déterminé sur la base de la reconnaissance de la carte personnelle par un ou des lecteurs prévus à cet effet.

Les numéros de téléphone, ou plus généralement leur adresse d'équipement mobile s'il s'agit d'un ordinateur portable, est transmis à un serveur de messages. Ce serveur peut être connecté aux usagers par plusieurs antennes de diffusion. La notion de local peut être comprise au delà du cercle de diffusion d'une antenne.

Le ou les balises définissant la zone de diffusion ont un premier ensemble d'usagers en connexion. Sur cet ensemble, un sous-ensemble a été reconnu comme souhaitant des services étendus. Cette reconnaissance est effectuée grâce à la carte personnelle.

Pour quitter ce sous-ensemble, l'usager a bien entendu la possibilité de présenter sa carte personnelle une seconde fois.

Lors de l'utilisation d'un système de détection sans contact, des distances de 50 cm à 1 m sont possibles. La présence de deux portiques de détection permet de déterminer si la personne entre ou quitte la zone à services ajoutés.

Une autre manière simple est de reconnaître le même usager sur une antenne de communication mobile hors de la zone de diffusion. On peut dès lors être sûr que l'usager a quitté la zone.

La présente invention peut être utilisée en étroite collaboration avec des systèmes de reconnaissances bio métriques.

Sous cette appellation, on entend la reconnaissance vocale, reconnaissance de l'empreinte digitale, reconnaissance de l'iris ou la détection olfactive.

Le terminal d'appariement au lieu de lire un numéro unique de l'objet personnel, enregistre les données bio métriques de l'usager en même temps que la communication entre l'équipement mobile et le serveur d'appariement. Le lecteur est remplacé par un détecteur d'empreinte digitale par exemple.

Ainsi, c'est ces données bio métriques qui sont associées au numéro de téléphone dans la base de données d'appariement du serveur SA.

Lors de l'identification d'un usager par un terminal de reconnaissance, l'usager introduit ses données bio métriques, tel qu'un texte vocal et les données saisies par le terminal sont transmises au serveur d'appariement afin de déterminer de quel usager il s'agit. Une fois cette détermination effectuée, la base de données du serveur permet d'y associer le numéro de téléphone de l'usager.

## Revendications

1. Méthode d'appariement entre un équipement mobile (ME) comprenant des informations (TEL) relatives à son identification et un objet personnel d'identification (SC) disposant d'au moins d'un numéro unique (UA), cette méthode étant effectuée par un terminal d'appariement (TA) et comprenant les étapes suivantes:
- lecture du numéro unique (UA) de l'objet personnel (SC) par un lecteur (CR) du terminal d'appariement (TA),
- initialisation d'une première communication entre l'équipement mobile (ME) et le serveur d'appariement (SA),
- transmission d'un code unique par le terminal d'appariement (TA) à l'équipement mobile (ME),
- émission de ce code unique par l'équipement mobile (ME) vers le serveur d'appariement (SA),
- détection et mémorisation des informations (TEL) relatives à l'identification de l'équipement mobile (ME) par le serveur d'appariement (SA),
- transmission du code unique et du numéro unique (UA) au serveur d'appariement (SA) par le terminal,
- association du numéro unique (UA) de l'objet personnel (SC) avec les informations (TEL) relatives à l'identification de l'équipement mobile (ME).

2. Méthode d'appariement selon la revendication 1, **caractérisée en ce que** le code unique est généré visuellement par le terminal d'appariement (TA) et introduit par l'utilisateur sur son équipement mobile (ME).

3. Méthode d'appartement selon la revendication 1, **caractérisée en ce que** le code unique est généré par tonalité DTMF par le terminal d'appariement (TA) grâce à un haut-parleur du terminal et transmis sur le microphone de l'équipement mobile (ME).

4. Méthode d'appariement selon les revendications 1 à 3, **caractérisé en ce que** le terminal d'appariement (TA) transmet comme code unique le numéro unique (UA) de l'objet personnel (SC).

5. Méthode d'appariement selon les revendications 1 à 3, **caractérisée en ce que** le code unique est différent du numéro unique (UA) et **en ce que**, lors d'une seconde communication, le terminal d'appariement (TA) transmet au serveur d'appariement (SA) le code unique et le numéro unique (UA), le serveur (SA) associe le numéro unique (UA) aux informations (TEL) relatives à l'identification de l'équipement mobile (ME) grâce au code unique.

6. Méthode d'appariement selon l'une des revendications 1 à 5, **caractérisée en ce que** l'objet personnel (SC) est une carte avec code barres, une carte magnétique ou une carte sans contact à lecture seule.

7. Méthode d'appariement selon les revendications 1 à 5, **caractérisée en ce que** l'objet personnel (SC) comprend une mémoire inscriptible et **en ce que** le serveur d'appariement (SA) transmet les informations (TEL) relatives à l'identification de l'équipement mobile (ME) au terminal (TA) qui les charge dans la mémoire de l'objet personnel (SC).

8. Méthode d'appariement selon la revendication 7, **caractérisée en ce que** les informations (TEL) relatives à l'identification de l'équipement mobile (ME) sont transmises par le serveur d'appariement (SA) à l'équipement mobile, (ME) lors de la première communication grâce à l'émission de code DTMF, lesdits codes étant interprétés par le terminal d'appariement (TA).

9. Méthode d'appariement selon la revendication 7, **caractérisée en ce que** les informations (TEL) relatives à l'identification de l'équipement mobile (ME) sont transmises par le serveur d'appariement (SA) au terminal d'appariement (TA) par l'envoi d'un message comprenant au moins le code unique et les informations (TEL) relatives à l'identification de l'équipement mobile (ME).

10. Méthode d'appariement selon l'une des revendications 7 à 9, **caractérisée en ce que** l'objet personnel (SC) est une carte à puce avec contact, une carte à puce sans contact ou une étiquette électronique de forme quelconque.

11. Méthode d'appariement selon les revendication 7 à 10, **caractérisée en ce que** les informations (TEL) relatives à l'identification de l'équipement mobile (ME) sont signées par une clé privée, cette signature est chargée dans la mémoire de l'objet personnel (SC).

## Claims

1. Matching method between mobile equipment (ME) comprising data (TEL) relating to its identification and a personal object of identification (SC) comprising at least a unique number (UA), this method being carried out by a matching terminal (TA) and comprising the following stages:
- reading of the unique number (UA) of the personal object (SC) by a reader (CR) of the matching terminal (TA),
- initialising a first communication between the mobile equipment (ME) and the matching server (SA),
- transmitting a unique code by the matching terminal (TA) to the mobile equipment (ME),
- transmitting this unique code by the mobile equipment (ME) towards the matching server (SA),
- detecting and storing the data (TEL) relating to the identification of the mobile equipment (ME) by the matching server (SA),
- transmitting the unique code and the unique number (UA) to the matching server (SA) by the terminal,
- associating the unique number (UA) of the personal object (SC) with the data (TEL) relating to the identification of the mobile equipment (ME).

2. Matching method according to claim 1, **characterized in that** the unique code is visually generated by the matching terminal (TA) and introduced by the user on its mobile equipment (ME).

3. Matching method according to claim 1, **characterized in that** the unique code is generated using DTMF tone by the matching terminal (TA) thanks to a loudspeaker of the terminal and transmitted on the microphone of the mobile equipment (ME).

4. Matching method according to claims 1 to 3, **characterized in that** the matching terminal (TA) transmits as a unique code the unique number (UA) of the personal object (SC).

5. Matching method according to claims 1 to 3, **characterized in that** the unique code is different to the unique number (UA) and **in that**, during a second communication, the matching terminal (TA) transmits the unique code and the unique number (UA) to the matching server (SA), the server (SA) associates the unique number (UA) to data (TEL) related to the identification of the mobile equipment (ME) thanks to the unique code.

6. Matching method according to one of the claims 1 to 5, **characterized in that** the personal object (SC) is a card with a bar code, a magnetic card or a contactless read only card.

7. Matching method according to claims 1 to 5, **characterized in that** the personal object (SC) comprises a writeable memory and **in that** the matching server (SA) transmits the data (TE) relating to the identification of the mobile equipment (ME) to the terminal (TA) that loads said data into the memory of the personal object (SC).

8. Matching method according to claim 7, **characterized in that** the data (TEL) relating to the identification of the mobile equipment (ME) is transmitted by the matching server (SA) to the mobile equipment (ME) during the first communication thanks to the emission of the DTMF code, said codes being interpreted by the matching terminal (TA).

9. Matching method according to claim 7, **characterized in that** the data (TEL) relating to the identification of the mobile equipment (ME) is transmitted by the matching server (SA) to the matching terminal (TA) by sending a message comprising at least the unique code and the data (TEL) relating to the identification of the mobile equipment (ME).

10. Matching method according to one of the claims 7 to 9, **characterized in that** the personal object (SC) is a contact smart card, a non-contact smart card or any form of electronic label.

11. Matching method according to the claims 7 to 10, **characterized in that** the data (TEL) relating to the identification of the mobile equipment (ME) is signed by a private key, this signature is loaded into the memory of the personal object (SC).

## Patentansprüche

1. Verfahren der Paarung zwischen einem Mobilgerät (ME), das Daten (TEL) bezüglich seiner Identität umfasst, und einem persönlichen Objekt der Identifikation (SC), das über zumindest eine eindeutige Nummer (UA) verfügt, wobei dieses Verfahren durch ein Paarungs-Endgerät (TA) ausgeführt wird und die folgenden Schritte umfasst:
- Lesen der eindeutigen Nummer (UA) des persönlichen Objekts (SC) durch einen Leser (CR) des Paarungs-Endgeräts (TA),
- Initialisierung einer ersten Kommunikation zwischen dem Mobilgerät (ME) und dem Paarungsserver (SA),
- Übermittlung eines eindeutigen Codes durch das Paarungs-Endgerät (TA) an das Mobilgerät (ME),
- Aussenden dieses eindeutigen Codes durch das Mobilgerät (ME) an den Paarungsserver (SA),
- Erfassung und Speicherung der Daten (TEL) bezüglich der Identität des Mobilgeräts (ME) durch den Paarungsserver (SA),
- Übermittlung des eindeutigen Codes und der eindeutigen Nummer (UA) durch das Endgerät an den Paarungsserver (SA),
- Verknüpfung der eindeutigen Nummer (UA) des persönlichen Objekts (SC) mit den Daten (TEL) bezüglich der Identität des Mobilgeräts (ME).

2. Verfahren der Paarung nach Anspruch 1, **dadurch gekennzeichnet, dass** der eindeutige Code durch das Paarungs-Endgerät (TA) visuell erzeugt und durch den Benutzer in sein Mobilgerät (ME) eingegeben wird.

3. Verfahren der Paarung nach Anspruch 1, **dadurch gekennzeichnet, dass** der eindeutige Code durch das Paarungs-Endgerät (TA) dank eines Lautsprechers des Endgeräts in Gestalt von DTMF-Tönen erzeugt und zum Mikrophon des Mobilgeräts (ME) übermittelt wird.

4. Verfahren der Paarung nach Ansprüchen 1 bis 3, **dadurch gekennzeichnet, dass** das Paarungs-Endgerät (TA) die eindeutige Nummer (UA) des persönlichen Objekts (SC) als eindeutigen Code übermittelt.

5. Verfahren der Paarung nach Ansprüchen 1 bis 3, **dadurch gekennzeichnet, dass** sich der eindeutige Code von der eindeutigen Nummer (UA) unterscheidet, und **dadurch**, dass während einer zweiten Kommunikation das Paarungs-Endgerät (TA) den eindeutigen Code und die eindeutige Nummer (UA) an den Paarungsserver (SA) übermittelt und der Server (SA) dank des eindeutigen Codes die eindeutige Nummer (UA) mit den Daten (TEL) bezüglich der Identität des Mobilgeräts (ME) verknüpft.

6. Verfahren der Paarung nach einem der Ansprüche 1 bis 5, **dadurch gekennzeichnet, dass** das persönliche Objekt (SC) eine Karte mit Balkencode, eine Magnetkarte oder eine kontaktfreie Nur-Lesekarte ist.

7. Verfahren der Paarung nach Ansprüchen 1 bis 5, **dadurch gekennzeichnet, dass** das persönliche Objekt (SC) einen beschreibbaren Speicher besitzt, und **dadurch**, dass der Paarungsserver (SA) die Daten (TEL) bezüglich der Identität des Mobilgeräts (ME) an das Endgerät (TA) übermittelt, das sie in den Speicher des persönlichen Objekts (SC) lädt.

8. Verfahren der Paarung nach Anspruch 7, **dadurch gekennzeichnet, dass** die Daten (TEL) bezüglich der Identität des Mobilgeräts (ME) dank der Aussendung von DTMF-Code während der ersten Kommunikation vom Paarungsserver (SA) an das Mobilgerät (ME) übermittelt werden, wobei die Codes durch das Paarungs-Endgerät (TA) interpretiert werden.

9. Verfahren der Paarung nach Anspruch 7, **dadurch gekennzeichnet, dass** die Daten (TEL) bezüglich der Identität des Mobilgeräts (ME) durch Versand einer Nachricht, die zumindest den eindeutigen Code und die Daten (TEL) bezüglich der Identität des Mobilgeräts (ME) umfasst, vom Paarungsserver (SA) an das Paarungs-Endgerät (TA) übermittelt werden.

10. Verfahren der Paarung nach einem der Ansprüche 7 bis 9, **dadurch gekennzeichnet, dass** das persönliche Objekt (SC) eine Chipkarte mit Kontakt, eine Chipkarte ohne Kontakt oder ein elektronisches Label beliebiger Gestalt ist.

11. Verfahren der Paarung nach Ansprüchen 7 bis 10, **dadurch gekennzeichnet, dass** die Daten (TEL) bezüglich der Identität des Mobilgeräts (ME) mit einem privaten Schlüssel signiert sind und diese Signatur in den Speicher des persönlichen Objekts (SC) geladen wird.
